(19) **Europäisches Patentamt / European Patent Office / Office européen des brevets**

(11) **EP 4 752 987 A1**

(12) **EUROPEAN PATENT APPLICATION**
published in accordance with Art. 153(4) EPC

(43) Date of publication:
03.06.2026 Bulletin 2026/23

(21) Application number: 24894506.5

(22) Date of filing: 14.11.2024

(51) International Patent Classification (IPC):
$H01M\ 4/66^{(2006.01)}$ $H01M\ 10/0562^{(2010.01)}$
$H01M\ 4/62^{(2006.01)}$ $H01M\ 10/052^{(2010.01)}$

(52) Cooperative Patent Classification (CPC):
H01M 4/62; H01M 4/66; H01M 10/052;
H01M 10/0562; Y02E 60/10

(86) International application number:
PCT/KR2024/017936

(87) International publication number:
WO 2025/110613 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.11.2023 KR 20230163656
13.11.2024 KR 20240161137

(71) Applicant: LG Energy Solution, Ltd.
Seoul 07335 (KR)

(72) Inventors:
• BYUN, Seoungwoo
Daejeon 34122 (KR)
• RYU, Jihoon
Daejeon 34122 (KR)
• KIM, Dong Kyu
Daejeon 34122 (KR)
• JUN, Youngjin
Daejeon 34122 (KR)
• LIM, Taeseob
Daejeon 34122 (KR)
• JANG, Eunji
Daejeon 34122 (KR)
• HAN, Seonggon
Daejeon 34122 (KR)

(74) Representative: Goddar, Heinz J.
Boehmert & Boehmert
Anwaltspartnerschaft mbB
Pettenkoferstrasse 22
80336 München (DE)

(54) **ELECTRODE FOR ANODE-FREE BATTERY HAVING OXIDE-BASED SOLID ELECTROLYTE PROTECTIVE LAYER AND LITHIUM SECONDARY BATTERY COMPRISING SAME**

(57) The present disclosure relates to an electrode and a secondary battery that can secure electrodeposition/desorption stability of lithium and prevent lithium dendrite formation and internal short circuit in lithium secondary battery. The electrode for an anode-free battery may include: an anode current collector; and an anode protective layer located on the anode current collector, wherein the anode protective layer comprises oxide-based solid electrolyte particles.

EP 4 752 987 A1

[FIG. 2]

**Description**

**[TECHNICAL FIELD]**

Cross-Reference to Related Application(s)

This application claims priority to and the benefit of Korean Patent Application no. 10-2023-0163656, filed on November 22, 2023, and Korean Patent Application no. 10-2024-0161137, filed on November 13, 2024, the entire contents of which are incorporated herein by reference.

The present disclosure relates to an electrode for an anode-free battery that can improve the stability of lithium electrodeposition/desorption behavior or the like and a lithium secondary battery comprising the same.

**[BACKGROUND ART]**

Recently, there has been a rising demand for high-capacity, high-output, long-life and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

Lithium metal secondary battery is a battery to which an anode active material made from lithium metal (Li-metal) material is applied, and has the advantage of having a theoretically very high energy density and capacity as compared with a battery to which a graphite-based or lithium alloy-based anode is applied according to the prior art. Thus, research and development are ongoing to apply such a lithium metal secondary battery to a battery that requires a high energy density.

However, the lithium metal secondary battery has a problem that due to the characteristics of lithium metal, which is an anode active material, the volume change of the anode is very large in a charge and discharge process, and lithium generated during charging grows into an acicular shape to form lithium dendrites. When such lithium dendrites continue to grow, they may penetrate through a separator to cause a cell short circuit, and as a result, a large problem may occur in battery performance, or a safety problem such as ignition may occur.

Meanwhile, in the case of lithium metal used as an anode material in the lithium metal secondary battery, since the reactivity with the electrolyte solution is high, an irreversible reaction can be steadily generated in a charge and discharge process. The surface film produced by such irreversible reaction collapses due to a large volume change during charging and discharging, and shows a problem of causing an additional irreversible reaction. In addition, such continuous irreversible reaction may cause a problem that the coulombic efficiency of the cell is decreased, and the performance of the cell is deteriorated as a whole.

Due to such a large disadvantage resulting from the lithium metal anode, in order to suppress the problems caused by continuous irreversible reactions on the surface of the lithium metal or the drawbacks caused by the growth of lithium dendrites, research and attempts have been continuously made since before to form an anode protective layer by applying various materials and methods to the surface of the lithium metal anode.

**[DETAILED DESCRIPTION OF THE INVENTION]**

**[Technical Problem]**

Therefore, it is an object of the present disclosure to provide an electrode for an anode-free battery that can solve the sudden death problems caused by lithium dendritic growth and internal short circuit due to the non-uniform distribution of ions at the copper current collector interface.

More specifically, it is an object of the present disclosure to secure the stability of lithium electrodeposition/desorption behavior, delay the decomposition of solvents and salts, and solve the life problems caused by lithium dendrite formation and internal short circuit.

**[Technical Solution]**

Hereinafter, an electrolyte composition for lithium metal batteries and the like according to specific embodiments of the present disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments and are not intended to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

As used herein, the term "anode-free battery" may refer to a secondary battery in which, in the state before charging and discharging, e.g., the state right after production, a separate anode active material layer, such as a lithium metal layer, a lithium alloy layer, or other carbon-containing layer does not exist on the anode current collector, e.g., a conductive metal layer such as copper, and a metal oxide layer having a large work function. Therefore, the "anode-free battery" can be defined as a battery in which the anode is formed of the anode current collector in the state before charging or discharging, and a separate anode active material layer or lithium metal layer is not included on the anode current collector. However, it goes without saying that, in addition to the anode active material layer or lithium metal layer, the addition of a separate insulating layer or other thin film that is not involved in the transfer of lithium ions and/or electrons during charging or discharging is not limited.

In addition, the term "anode-free battery" cannot be construed as limiting the presence of a lithium-containing cathode active material, or limiting the presence of a lithium metal layer or lithium-containing compound that grows on the anode current collector by execution of charge/discharge.

**Electrode for anode-free battery**

According to certain embodiments of the present disclosure, there is provided an electrode for an anode-free battery, comprising: an anode current collector; and an anode protective layer located on the anode current collector, wherein the anode protective layer comprises oxide-based solid electrolyte particles, and wherein the oxide-based solid electrolyte particles satisfy an average diameter of 0.02 to 10 $\mu$m and a particle size distribution span of < 1. The electrode for an anode-free battery may apply an anode protective layer that is located on an anode current collector and includes oxide-based solid electrolyte particles, and control the distribution of lithium ions at the metal current collector interface and the structure of the electrolyte solution during charge/discharge, thereby securing the stability of lithium electrodeposition/desorption behavior.

In exemplary embodiments, as the anode current collector, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped $SnO_2$), FTO (F doped $SnO_2$), and their alloys, and copper (Cu) or stainless steel that is surface-treated with carbon (C), nickel (Ni), titanium (Ti) or silver (Ag) may be used, but are not necessarily limited thereto. The anode current collector may have various forms such as a foil, a film, a sheet, a punched one, a porous body, a foam body, and the like.

In exemplary embodiments, the anode protective layer may further include a conductive material. The conductive material may improve the active surface area of lithium nuclides. Specifically, the conductive material may include one or more selected from the group consisting of carbon powder such as carbon black, acetylene black, Ketjen black, channel black, furnace black, lamp black, or thermal black; graphite powder such as natural graphite with highly-developed crystalline structure, artificial graphite, or graphite; and conductive nanomaterials such as graphene, carbon nanofibers, or carbon nanotubes. For example, the conductive material may include carbon black having a spherical shape or graphene having a plate shape.

In exemplary embodiments, the oxide-based solid electrolyte particles may satisfy an average diameter of 0.02 to 10 $\mu$m and a particle size distribution span of < 1. For example, the oxide-based solid electrolyte particles may have a diameter in the range of 0.05 $\mu$m or more, 0.1 $\mu$m or more, 0.2 $\mu$m or more, and 5.0 $\mu$m or less, 3.0 $\mu$m or less, 1.0 $\mu$m or less, 0.5 $\mu$m or less, 0.4 $\mu$m or less, and 0.3 $\mu$m or less. Preferably, the electrolyte particles may have an average diameter in the range of 0.1 $\mu$m to 1.0 $\mu$m, 0.1 to 0.5 $\mu$m, or 0.2 to 0.4 $\mu$m. Meanwhile, if the particle size distribution span is outside the range of <1, the anode protective layer may not be properly applied.

Specifically, the oxide-based solid electrolyte particles may have a specific average diameter and a uniform particle size distribution with a span of 1 or less. As a result of the experiments by the present inventors, since the oxide-based solid electrolyte particles satisfying a specific particle size distribution are included in the electrode protective layer, the metal collector interface ion distribution may be made uniform.

Further, the oxide-based solid electrolyte particles may show a single peak in the range of 0.1 to 1.0 $\mu$m through a particle size distribution (PSD) analysis. If the oxide-based solid electrolyte particles are aggregated without being sufficiently dispersed, they may have a bimodal distribution of double peaks, which may cause cracks, performance imbalances or the like during drying after slurry application.

In exemplary embodiments, the oxide-based solid electrolyte may have a sample variance of 0.04 or less, as expressed by the following Mathematical Formula 1 through EDS analysis.

[Mathematical Formula 1]

$$s^2 = \frac{\sum(y - \bar{y})^2}{n - 1} = \frac{SS}{df}$$

wherein, $s^2$ is the sample variance, y is the variable, $\bar{y}$ is the sample mean, n is the sample size, SS is the sum of squares of deviations, and df is the degree of freedom.

For example, the sample variance may be 0.04 or less, or 0.03 or less, and if the sample variance is more than 0.04, the uniform dispersion of the oxide-based solid electrolyte may not be secured, and thus the stability of electrodeposition/desorption behavior of lithium may not be secured.

Specifically, the sample variance may be calculated via Mathematical Formula 1 by extracting pixel information from the EDS Ti and/or P element mapping image, dividing it into n uniform grids, and setting the value for each sample. The sample variance value represents the variance degree of Ti and P between grids. A smaller sample variance value means that the Ti and P elements are more uniformly distributed in the entire grid. Therefore, a smaller sample variance value indicates that the oxide-based solid electrolyte (LATP) is more uniformly distributed in the electrode protective layer.

Meanwhile, the sample variance can be obtained by analyzing the variance degree of the oxide-based solid electrolyte (LATP) within the electrode based on the mapping image of the Ti and P elements of the oxide-based solid electrolyte LATP among the SEM and EDS analysis results of the electrode cross section, and specifically, it was converted and extracted into an Excel file format based on the pixel information of the EDS Ti and P element mapping images. The extracted data may be divided into a total of 1150 (50 x 23) grids and set as a sample, and the sample variance of Ti and P elements may be calculated.

In exemplary embodiments, the oxide-based solid electrolyte may be any solid electrolyte that includes lithium in its structure to have a lithium ion source, and has the form of lithium metal oxide or lithium metal phosphate.

Specific examples thereof include one or more lithium metal oxides or lithium metal phosphates selected from Nasicon-type solid electrolyte, Lisicon-type solid electrolyte, Garnet-type solid electrolyte, Perovskite-type solid electrolyte, and LiPON-type solid electrolyte. More specific examples thereof include one or more selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, and LGPO (lithium germanium phosphate)-based compound.

Among these, from the viewpoint of uniformly distributing lithium ions at the current collector interface, NASICON-type solid electrolyte such as the LAGP-type compound or the LATP-type compound may be suitably used.

In exemplary embodiments, the anode protective layer may further include a binder. The binder may be a component that assists in the bonding between oxide-based solid electrolyte particles and the like and in the bonding to the current collector. The binder may be typically added in an amount of 1 to 30% by weight based on the total weight of the solid content in the anode slurry. The binder is added in an amount of 1 part by weight to 50 parts by weight, more specifically 3 parts by weight to 15 parts by weight, based on the total weight of the solid content in the anode slurry. If the amount of the binder added is less than 1 part by weight, the adhesive strength between the electrode active material and the current collector may be insufficient, and if the amount of the binder added is more than 50 parts by weight, the adhesive strength may be improved, but the content of the electrode active material may decrease by that amount, which may lower the battery capacity.

Examples of the binder may include polyvinylidene fluoride, polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylenepropylene-diene monomer (EPDM), sulfonated EPDM, styrene-butadiene rubber, fluororubber, various copolymers or the like.

In exemplary embodiments, the anode protective layer may have a thickness of 1 to 10$\mu$m. When the thickness range is more than 10$\mu$m, it may be advantageous in delaying internal short circuits due to lithium dendrites, but battery performance may be degraded in maximizing resistance from the viewpoint of ion conduction.

In exemplary embodiments, the oxide-based solid electrolyte particles may be included in an amount of 50 to 95% by weight based on the total weight of the anode protective layer. When the oxide-based solid electrolyte particles are included in the above-mentioned range, the stability of lithium electrodeposition/desorption behavior, etc. may be improved, particularly, when the amount of the particles is less than 50% by weight, the effect due to the addition of the oxide-based solid electrolyte may be insufficient.

Meanwhile, as the method for preparing an electrode for an anode-free battery as described above, a method for preparing an electrode for an anode-free battery is provided, comprising a step of mixing and dispersing an oxide-based solid electrolyte and a solvent to prepare a solid electrolyte dispersion; and a step of applying the solid electrolyte dispersion onto an electrode current collector to form an electrode protective layer.

In exemplary embodiments, the step of preparing a solid electrolyte dispersion may be performed using a bead-milling method. Prior to forming an electrode protective layer, the oxide-based solid electrolyte and the solvent are pre-dispersed, so that the oxide-based solid electrolyte particles can be uniformly distributed within the electrode protective layer.

**Lithium secondary battery**

According to certain other embodiments of the present disclosure, there is provided a lithium secondary battery comprising: a cathode; an anode; and an electrolyte containing a lithium salt and a non-aqueous organic solvent, wherein the lithium secondary battery comprises the above-mentioned electrode for an anode-free battery as an anode. A lithium secondary battery according to certain other embodiments of the present disclosure applies an electrode protective layer including oxide-based solid electrolyte particles and a conductive material, and controls the distribution of lithium ions at the metal current collector interface and the structure of the electrolyte during charge/discharge, thereby securing the stability of lithium electrodeposition/desorption behavior, delaying the decomposition of solvents and salts, and solve the life problems caused by lithium dendrite formation and internal short circuit.

In exemplary embodiments, the anode may not include an anode active material layer, but may include only an anode current collector. In such an anode, lithium ions moved from the cathode in a charge and discharge process may be deposited on the anode current collector to form a lithium metal layer, and this lithium metal layer may function as an anode active material.

Meanwhile, a cathode for a lithium secondary battery according to the exemplary embodiments may be produced by, for example, mixing and dispersing the cathode active material, the oxide-based solid electrolyte, the binder, and the conductive agent in a dispersion medium (solvent) to make a slurry, and applying the slurry on a metal current collector, followed by drying and rolling. At this time, the dispersion medium may be NMP (N-methyl-2-pyrrolidone), DMF (Dimethyl formamide), DMSO (Dimethyl sulfoxide), ethanol, isopropanol, water, and mixtures thereof, but is not necessarily limited thereto.

In exemplary embodiments, the lithium secondary battery further comprises a separator interposed between the cathode and the anode, or the electrolyte has the form of an electrolyte membrane or an electrolyte film that contains the lithium salt and the non-aqueous organic solvent in a polymer matrix, and is interposed between the cathode and the anode.

The lithium secondary battery of certain other embodiments described above includes an electrolyte containing lithium salt and a non-aqueous organic solvent. The electrolyte functions as a transfer medium for lithium ions between the cathode and the anode, wherein the lithium ions exist in the electrolyte in a solvated state, while they can be de-solvated at the interface between the electrolyte and the electrode and inserted into the electrode active material.

The lithium salt contained in the electrolyte is used as a medium for transferring ions within a lithium secondary battery. For example, the lithium salt may include $Li^+$ as a cation, and may together include an anion selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$. For example, the lithium salt may include one or more selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl) imide, $LiN(SO_2F)_2$), LiBETI (lithium bis(perfluoroethanesulfonyl) imide, $LiN(SO_2CF_2CF_3)_2$) and LiTFSI (lithium bis(trifluoromethanesulfonyl) imide, $LiN(SO_2CF_3)_2$).

The concentration of the lithium salt can be appropriately changed within the normally usable range, and may be included in the electrolyte at a concentration of 0.5M to 6M, or at a concentration of 1M to 5M.

In more specific embodiments, the electrolyte may include the lithium salt at a relatively low concentration of 0.5M or more and less than 2M, or 0.7M to 1.5M. Even in such a case, as de-solvation of lithium ions is accelerated by the action of the electrode of certain embodiments described above, the lithium secondary battery of certain other embodiments may exhibit improved output characteristics. As a result, it is possible to not only solve problems such as an increase in electrolyte viscosity, a decrease in fluidity, and a decrease in electrolyte ionic conductivity and battery output at low temperatures due to the application of an electrolyte composition containing the lithium salt at a high concentration, but also achieve excellent low-temperature characteristics of a lithium secondary battery.

On the other hand, by applying the electrode for a lithium ion battery according to certain embodiments, the lithium ion conductivity can be improved and the resistance can be reduced even at low temperatures. Thus, it is possible to reduce deterioration in low-temperature output characteristics due to high concentration of lithium salts, and the like.

Meanwhile, the kind of a non-aqueous organic solvent that can be included in the electrolyte is not particularly limited, and any organic solvent that has been known to be applicable to the electrolyte of a lithium ion battery can be used. Examples of such organic solvents include one or more selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the electrolyte may, in addition to the lithium salt and the non-aqueous organic solvent, further include a diluent that exhibits a solubility of the lithium salt that is at least 10 times lower than that of the non-aqueous organic solvent. Such a diluent is an organic solvent that is miscible with the non-aqueous organic solvent without substantially showing solubility in the lithium salt. For example, it may be an ether-based solvent having a fluorine-substituted alkyl group, and more specifically, it may include one or more selected from the group consisting of 1,1,2,2-tetrafluoroethyl-2,2,3,3-tetrafluoropropyl ether (TTE), bis(2,2,2-trifluoroethyl)ether (BTFE), 1,1,2,2-tetrafluoroethyl-2,2,2-trifluoroethyl ether (TFTFE), methoxynona fluorobutane(MOFB) and ethoxynona fluorobutane (EOFB).

When such a diluent is further included, a locally high concentration of lithium salt may exist in the non-aqueous organic solvent in the electrolyte, and a lithium salt may not substantially exist in the diluent. As a locally high concentration of lithium salt exists in a solvated form in the electrolyte in this way, the output characteristics of the lithium secondary battery can be further improved, and also the increase in viscosity and the decrease in fluidity of the electrolyte can be reduced. In addition, if the electrode of one embodiment is applied together with this locally high concentration of lithium salt electrolyte, the lithium ion conductivity can be improved and the resistance can be reduced even at low temperatures, thereby reducing the deterioration of low-temperature output characteristics caused by high-concentration lithium salt, etc.

The amount of the diluent used can be adjusted depending on the type of non-aqueous organic solvent and lithium salt, or the overall concentration of the lithium salt. For example, the diluent : the non-aqueous organic solvent may be included in the electrolyte at a molar ratio of 1:0.2 to 1:5, or 1:0.5 to 1:2.

Meanwhile, the lithium secondary battery of certain other embodiments described above may further include a porous separator interposed between the cathode and the anode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber nonwoven fabric (glass filter) as a separator, and it may be more preferable to apply a porous glass filter (glass fiber nonwoven fabric) as a separator. The separator may be an insulating thin film with high ion permeability and mechanical strength, and the pore diameter of the separator may generally range from 0.01 to 10 $\mu$m, and the thickness may generally range from 5 to 300 $\mu$m, but are not limited thereto.

In addition, in certain other embodiments of the lithium secondary battery, the separator may not be interposed, but the above-mentioned electrolyte may be interposed between the cathode and the anode in the form of an electrolyte membrane or an electrolyte film. At this time, the electrolyte membrane or the electrolyte film may be a form containing the above-mentioned lithium salt and non-aqueous organic solvent in a polymer matrix. As the polymer matrix, a well-known polymer-based solid electrolyte or the like may be used. In this case, the lithium secondary battery of certain other embodiments may be a semi-solid-state battery that uses a liquid electrolyte and a solid electrolyte in combination.

Meanwhile, the lithium secondary battery of certain other embodiments may be produced according to a conventional method in the art. For example, the lithium secondary battery can be produced by housing an electrode assembly including a cathode, an anode, and a separator (or electrolyte membrane) in a case, and injecting and impregnating the above-mentioned electrolyte in the case.

Such a lithium secondary battery can be applied not only to a battery cell used as power sources for small-sized devices, but can also be particularly suitably used as a unit battery in a battery module, which is a power source for medium-sized and large-sized devices.

**[Advantageous Effects]**

The electrode for an anode-free battery of the present disclosure applies an anode protective layer located on the anode current collector and including oxide-based solid electrolyte particles, and controls the distribution of lithium ions at the metal current collector interface and the structure of the electrolyte during charge/discharge, thereby securing the stability of lithium electrodeposition/desorption behavior.

In addition, it is possible to delay the decomposition of solvents and salts, and solve the life problems caused by lithium dendrite formation and internal short circuit.

## [BRIEF DESCRIPTION OF THE DRAWING]

FIGS. 1 to 4 show voltage changes versus areal capacity in the batteries applied with the electrodes according to Example 1-2 and Comparative Example 1-2.

FIG. 5 shows polarization level changes versus cycles in the batteries applied with the electrodes according to Example 1-2 and Comparative Example 1-2.

FIG. 6 shows coulombic efficiency versus cycles in the batteries applied with the electrodes according to Example 1-2 and Comparative Example 1-2.

FIG. 7 shows the results of particle size distribution (PSD) measurement of oxide-based solid electrolyte LATP in the electrode according to Example 1.

FIG. 8 shows the results of particle size distribution (PSD) measurement of oxide-based solid electrolyte LATP in the electrode according to Comparative Example 2.

FIG. 9 shows EDS analysis results in the electrodes according to Example 1.

## [DETAILED DESCRIPTION OF THE EMBODIMENTS]

Hereinafter, embodiments of the present disclosure will be described so that those skilled in the art can easily carry out them. However, the present disclosure can be modified in various different ways, and is not limited to the embodiments set forth herein.

### Example 1: LATP protective layer electrode

10 g of $LiAl_{0.3}Ti_{1.7}(PO_4)_3$ oxide-based solid electrolyte (LATP) with a D50: 300 nm, PVdF binder (PVdF:LATP weight ratio of 10:90) and 90 g of NMP were mixed, and a bead was added to the mixture, followed by performing a dispersion process using a spike mill for 40 minutes to prepare a solid electrolyte nanoparticle dispersion. Then, the solid electrolyte nanoparticle dispersion was sprayed on a Cu current collector and dried to form a protective layer with a thickness of $8\mu m$, thereby producing an electrode for an anode-free battery having a LATP protective layer.

### Example 2: LATP & CNT protective layer electrode

An electrode for an anode-free battery having a LATP and CNT protective layer was produced in the same manner as in Example 1, except that 50 g of $LiAl_{0.3}Ti_{1.7}(PO_4)_3$ oxide-based solid electrolyte (LATP) with a D50: 300 nm, PVdF binder (PVdF:LATP weight ratio of 10:90), 50g of CNT and 50 g of NMP were mixed.

### Comparative Example 1: Bare electrode

A Cu current collector (SK Nexilis, $8\mu m$) was used.

### Comparative Example 2: Span=3.883 electrode

An electrode for an anode-free battery having a LATP protective layer was produced in the same manner as in Example 1, except that a dispersion process was not performed using a spike mill for 40 minutes. On the other hand, the produced electrodes showed cracks formed on the protective layer in a drying step after coating the anode protective layer.

### Experimental Example 1: Results of particle size distribution (PSD) measurement

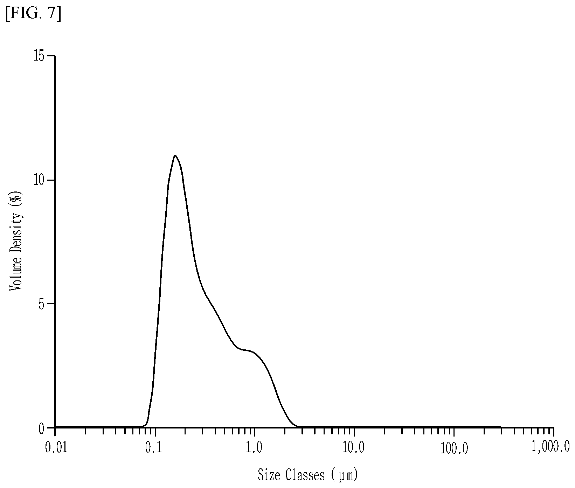

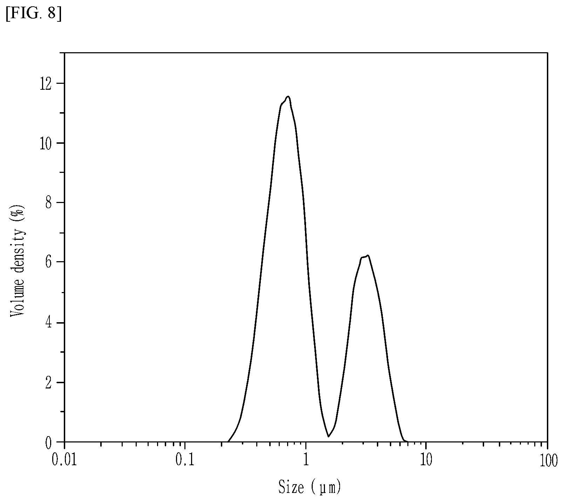

A particle size analyzer (Malvern Mastersizer) was used to confirm the degree of particle distribution of the oxide-based solid electrolyte LATP in the electrodes of Example 1 and Comparative Example 2. The resulting graphs are shown in FIGS. 7 and 8. Referring to FIG. 7, a single peak was observed around 0.2 to 0.3um. Therefore, it was confirmed that the average diameter of 0.02 - 10$\mu$m and particle size distribution span of < 1 of Example 1 were satisfied.

On the other hand, referring to FIG. 8, it was confirmed that in the case of Comparative Example 2, a double peak was observed, and measured with D10: 0.454 um, D50: 0.827 um, D90: 3.66 um, D99: 5.18 um, D100: 5.91 um, and the particle size distribution span was 3.883, which is span > 1.

**Experimental Example 2: EDS Analysis**

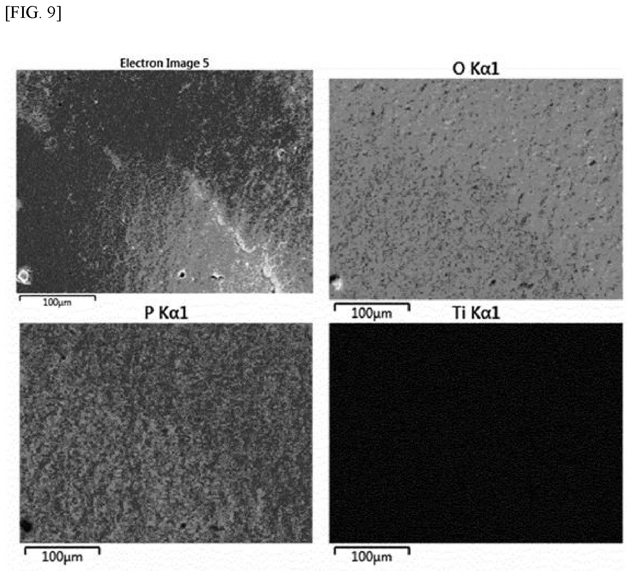

Based on the mapping images of the O, Ti, and P elements of the oxide-based solid electrolyte LATP among the SEM and EDS analysis results of the electrode cross section of Example 1, the variance degree of the oxide-based solid electrolyte (LATP) in the electrode was analyzed, and the results are shown in FIG. 9.

First, the pixel information of the EDS O, Ti, and P element mapping images was converted into an Excel file format and extracted. The extracted data was divided into a total of 1,150 (50 X 23) grids and set as samples, and the sample variances of the O, Ti, and P elements were calculated. The specific sample variance was obtained using the following Mathematical Formula 1.

$$[\text{Mathematical Formula 1}]$$
$$s^2 = \frac{\sum(y - \bar{y})^2}{n - 1} = \frac{SS}{df}$$

wherein, $s^2$ is the sample variance, y is the variable, $\bar{y}$ is the sample mean, n is the sample size, SS is the sum of squares of deviations, and df is the degree of freedom.

As a result, it could be confirmed that Example 1 has a sample variance value of 0.04 or less.

**Experimental Example 3: Lithium electrodeposition behavior**

The coin cell was produced by applying the electrodes of Example 1-2 and Comparative Example 1-2. Specifically, a Cu cathode (Cu coated with LATP can also be used), a separator, and a gasket were sequentially stacked on the bottom of the coin cell, and then an electrolyte was applied. Then, lithium metal as the anode, a 1 mm thick spacer, and a spring were sequentially placed, and then closed with a cap, and a certain pressure was applied and sealed to produce the coin cell.

1) By applying a current density of 0.5 mA cm$^{-2}$ to the assembled coin cell, electrodeposition was performed on Cu to have a capacity per area of 1 mAh cm$^{-2}$, and when stripping the electrodeposited lithium, a 1 V cut-off was performed at the same current density.

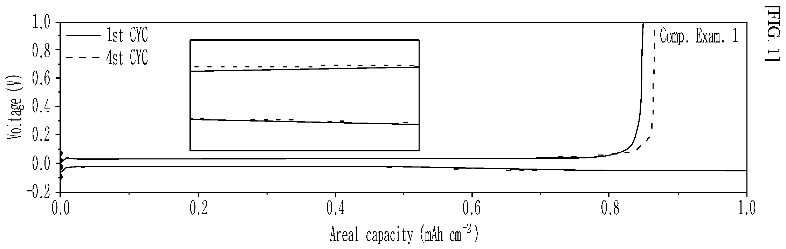

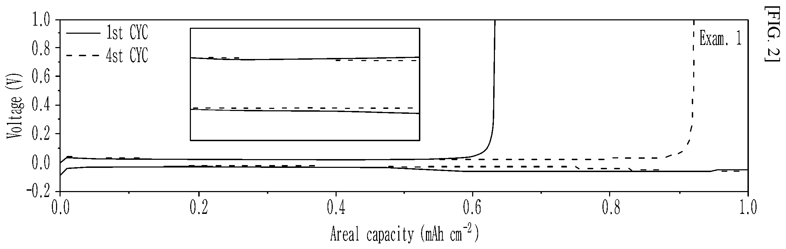

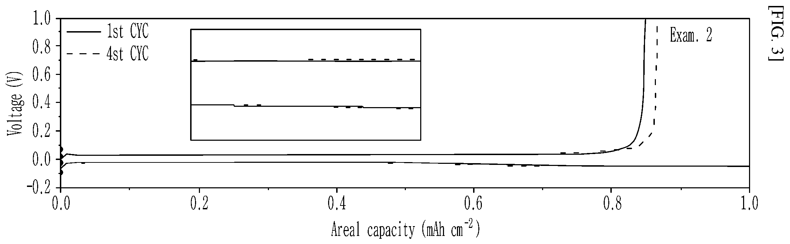

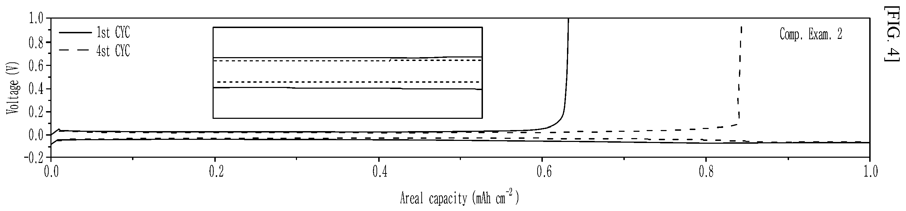

FIGS. 1 to 4 show voltage changes versus areal capacity in the batteries applied with the electrodes according to Example 1-2 and Comparative Example 1-2. In the experiment, it was expected that there would be a decrease in the Li electrodeposition overpotential when the space charge region was formed, but it was confirmed that the initial nucleation overpotential increased with the introduction of the electrode protection layer. This is expected to be due to the influence of the initial bulk diffusivity.

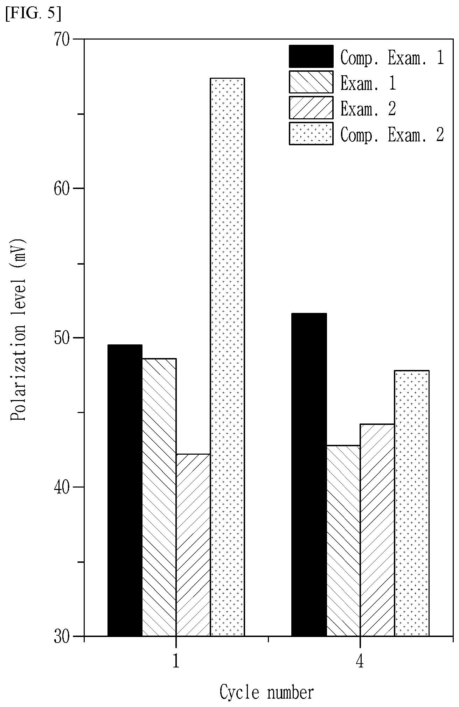

2) Referring to FIG. 5, the overpotential between the charge/discharge curves was measured in the intermediate flat region excluding the initial and final stages under the experimental conditions of FIGS. 1 to 4.

FIG. 5 shows polarization level changes versus cycles in the batteries applied with the electrodes according to Example 1-2 and Comparative Example 1-2. As a result, it was confirmed that the efficiency is improved due to the increase in the electrodeposition/desorption rate when the electrode protection layer was introduced, and also that the polarization level between the electrodeposition and desorption is lowered. In particular, it was confirmed that Comparative Example 2 having a span > 1 range has the highest polarization level. As a result, it was confirmed that the life characteristics are improved through the electrode protective layer, and in particular, the capacity realization rate can be improved.

3) Next, the charge/discharge efficiency was measured. In this experiment, the charge/discharge efficiency is the ratio of the electrodeposition amount/desorption amount, which can be expressed by the following Mathematical Formula 2.

Charge/discharge efficiency (%) = *Desorption amount/Electrodeposition amount* $\times$ 100       [Mathematical Formula 2]

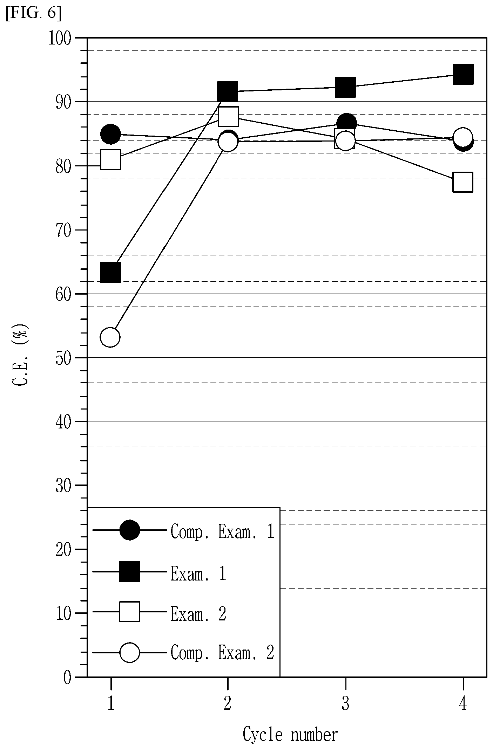

FIG. 6 shows the coulombic efficiency versus cycle in the battery applied with the electrodes according to Example 1-2 and Comparative Example 1-2. As a result, it was confirmed that by introducing the protective layer, desorption of up to 95% of the electrodeposition amount is possible, and the efficiency shows a level improved by about 10% compared to Comparative Example 1.

**Claims**

1. An electrode for an anode-free battery, comprising:

   an anode current collector; and
   an anode protective layer located on the anode current collector,
   wherein the anode protective layer comprises oxide-based solid electrolyte particles, and
   wherein the oxide-based solid electrolyte particles have an average diameter ranging from 0.02 to 10 $\mu$m and a particle size distribution span of < 1.

2. The electrode for the anode-free battery according to claim 1,

   wherein the anode protective layer further comprises a conductive material, and
   wherein the conductive material is one or more selected from the group consisting of carbon black, acetylene black, KETJEN BLACK, channel black, furnace black, lamp black, thermal black, natural graphite, artificial graphite, graphite, graphene, carbon nanofibers, and carbon nanotubes.

3. The electrode for the anode-free battery according to claim 1,
   wherein the oxide-based solid electrolyte particles show a single peak in a range of 0.1 to 1.0 $\mu$m through a particle size distribution (PSD) analysis.

4. The electrode for the anode-free battery according to claim 1,

   wherein the oxide-based solid electrolyte particles have a sample variance of 0.04 or less as expressed by the following Mathematical Formula 1 through EDS analysis:

   [Mathematical Formula 1]
   $$s^2 = \frac{\sum(y - \bar{y})^2}{n - 1} = \frac{SS}{df}$$

   wherein, $s^2$ is the sample variance, y is a variable, $\bar{y}$ is a sample mean, n is a sample size, SS is a sum of squares of deviations, and df is a degree of freedom.

5. The electrode for the anode-free battery according to claim 1,
   wherein the oxide-based solid electrolyte particles comprise one or more selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, and LGPO (lithium germanium phosphate)-based compound.

6. The electrode for the anode-free battery according to claim 1,
   wherein the anode protective layer has a thickness ranging from 1 to 20 $\mu$m.

7. The electrode for the anode-free battery according to claim 1,
   wherein the oxide-based solid electrolyte particles are included in an amount ranging from 50 to 95% by weight based on a total weight of the anode protective layer.

8. A lithium secondary battery comprising:

   a cathode;
   an anode; and
   an electrolyte containing a lithium salt and a non-aqueous organic solvent,
   wherein the lithium secondary battery comprises the electrode for the anode-free battery according to any one of claims 1 to 7 as an anode.

9. The lithium secondary battery according to claim 8,
   wherein the lithium salt comprises one or more selected from the group consisting of LiCl, LiBr, LiI, LiBF$_4$, LiClO$_4$,

$LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (lithium bis(fluorosulfonyl) imide, $LiN(SO_2F)_2$), LiBETI (lithium bis(perfluoroethanesulfonyl) imide, $LiN(SO_2CF_2CF_3)_2$, LiTFSI (lithium bis(trifluoromethanesulfonyl) imide, and $LiN(SO_2CF_3)_2$).

10. The lithium secondary battery according to claim 8,

further comprising a separator interposed between the cathode and the anode,
wherein the electrolyte has a form of an electrolyte membrane or an electrolyte film that contains the lithium salt and the non-aqueous organic solvent in a polymer matrix, and wherein the electrolyte is interposed between the cathode and the anode.

[FIG. 1]

[FIG. 2]

[FIG. 3]

[FIG. 4]

[FIG. 5]

[FIG. 6]

[FIG. 7]

[FIG. 8]

[FIG. 9]

## INTERNATIONAL SEARCH REPORT

| International application No. |
| --- |
| **PCT/KR2024/017936** |

### A. CLASSIFICATION OF SUBJECT MATTER

**H01M 4/66**(2006.01)i; **H01M 10/0562**(2010.01)i; **H01M 4/62**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/66(2006.01); C01F 17/10(2020.01); C01F 17/30(2020.01); H01M 10/052(2010.01); H01M 10/0585(2010.01); H01M 4/13(2010.01); H01M 4/134(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무음극 전지(anodeless battery), 집전체(current collector), 보호층(protective layer), 산화물계 고체 전해질 입자(oxide-based solid electrolyte particles)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2023-0111439 A (HYUNDAI MOTOR COMPANY et al.) 25 July 2023 (2023-07-25) See paragraphs [0035], [0051] and [0059]; and figure 1. | 1-10 |
| A | KR 10-2023-0072827 A (KOREA INSTITUTE OF INDUSTRIAL TECHNOLOGY) 25 May 2023 (2023-05-25) See entire document. | 1-10 |
| A | US 2022-0376247 A1 (ZETA ENERGY LLC) 24 November 2022 (2022-11-24) See entire document. | 1-10 |
| A | KR 10-2022-0066728 A (SAMSUNG ELECTRONICS CO., LTD.) 24 May 2022 (2022-05-24) See entire document. | 1-10 |
| A | KR 10-2022-0147855 A (LG ENERGY SOLUTION, LTD.) 04 November 2022 (2022-11-04) See entire document. | 1-10 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 February 2025** | **21 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/017936**

| Patent document cited in search report | | | Publication date (day/month/year) | Patent family member(s) | | | Publication date (day/month/year) |
|---|---|---|---|---|---|---|---|
| KR | 10-2023-0111439 | A | 25 July 2023 | CN | 116470120 | A | 21 July 2023 |
| | | | | US | 2023-0231143 | A1 | 20 July 2023 |
| KR | 10-2023-0072827 | A | 25 May 2023 | KR | 10-2670735 | B1 | 30 May 2024 |
| US | 2022-0376247 | A1 | 24 November 2022 | EP | 4342008 | A1 | 27 March 2024 |
| | | | | WO | 2022-245571 | A1 | 24 November 2022 |
| KR | 10-2022-0066728 | A | 24 May 2022 | US | 11894513 | B2 | 06 February 2024 |
| | | | | US | 2022-0158225 | A1 | 19 May 2022 |
| KR | 10-2022-0147855 | A | 04 November 2022 | | None | | |

Form PCT/ISA/210 (patent family annex) (July 2022)

**REFERENCES CITED IN THE DESCRIPTION**

**Patent documents cited in the description**

- KR 1020230163656
- KR 1020240161137